# EUROPEAN PATENT SPECIFICATION

(11) **EP 4 507 098 B1**
(45) Date of publication and mention of the grant of the patent: **29.07.2026**
(21) Application number: 23784941.9
(22) Date of filing: 03.04.2023
(51) Int. Cl.: H01M 50/325, H01M 50/383, H01M 50/204, H01M 50/24

(54) **BATTERY PACK**
BATTERIEPACK
BLOC-BATTERIE

(30) Priority: 06.04.2022 KR 20220043108; 28.03.2023 KR 20230040828
(43) Date of publication of application: 12.02.2025
(73) Proprietor: LG Energy Solution, Ltd., Seoul 07335 (KR)
(72) Inventor: BAEK, Seung Ryul, Daejeon 34122 (KR); SEOL, Jae Jung, Daejeon 34122 (KR); KIM, Sang Jin, Daejeon 34122 (KR); KIM, Ji Hun, Daejeon 34122 (KR)
(74) Representative: Goddar, Heinz J.
(86) International application number: PCT/KR2023/004462
(87) International publication number: WO 2023/195716

(56) References cited:
- KR-A- 20080 015 164
- KR-A- 20150 061 996
- KR-A- 20180 050 432
- KR-A- 20210 109 314
- KR-A- 20220 041 572
- US-A- 3 597 282
- US-B2- 8 354 181

## Description

### TECHNICAL FIELD

The present application claims the benefit of the priority of Korean Patent Application Nos. 10-2022-0043108, filed on April 06, 2022, and 10-2023-0040828, filed on March 28, 2023.

The present invention relates to a battery pack that accommodates a secondary battery.

### BACKGROUND ART

In general, types of secondary batteries include a nickel-cadmium battery, a nickel-hydrogen battery, a lithium-ion battery, a lithium-ion polymer battery and the like. These secondary batteries are applied to and used in not only small-sized products such as digital camera, P-DVD, MP3P, mobile phone, PDA, portable game device, power tool and E-bike, but also large-sized products such as electric vehicle and hybrid vehicle, which require high output, energy storage systems for storing surplus electricity or new renewable energy, and energy storage systems for backup. Such a battery pack is for example known from US 8,354,181 B2

In order to manufacture these secondary batteries, a positive electrode collector and a negative electrode collector are coated with electrode active material slurry to make a positive electrode and a negative electrode, and then the positive electrode and the negative electrode are stacked at both sides of a separator to form an electrode assembly having a predetermined shape. Thereafter, a battery case accommodates the electrode assembly and is sealed after injection of an electrolyte.

A battery pack is utilized to accommodate these secondary batteries, and during a process in which the secondary batteries are used or delivered by being accommodated in the battery pack, an accident in which the secondary batteries are damaged or exploded due to an internal defect may occur. Due to the explosion of the secondary batteries, pressure inside the battery pack may rapidly increase to cause casualties and damage to property, for example, the battery pack is exploded or a toxic gas and flame are discharged unintentionally.

In order to prevent these problems, a battery pack is necessary which is capable of effectively discharging the internal gas and flame by being manufactured to have a structure that is deformable even when the internal pressure is increased by the gas, flame and the like inside the battery pack.

The document US 8 354 181 B2 discloses a battery capable of providing both fixing durability of a protective film during normal use and peeling easiness of the protective film during operation of a safety valve.

The document US 3 597 282 A discloses a rechargeable button type battery formed by two casing halves and including a gas vent.

### DISCLOSURE OF THE INVENTION

### TECHNICAL PROBLEM

An object of the present invention for solving the above problems is to provide a battery pack that is deformed according to internal pressure to discharge an internal material such as internal gas and flame.

### TECHNICAL SOLUTION

In a battery pack in which a secondary battery is accommodated, the battery pack according to an embodiment of the present invention may include a housing, in which an accommodation space in which the secondary battery is accommodated is defined, and a switching part, which is mounted on the housing and elastically deformed according to pressure of the accommodation space to adjust communication between the accommodation space and an external space of the housing.

The housing has one end in which a communication groove is recessed. A communication passage through which the accommodation space and the external space communicate with each other is provided inside the communication groove, and the switching part is disposed on the communication passage to block the communication between the accommodation space and the external space before being elastically deformed.

The housing may further include a sealing groove that is recessed in each of both sides of the communication groove, and the switching part may be disposed inside the sealing groove in a state of passing through the communication groove.

The switching part may include an elastic portion, which is disposed inside the communication groove to be elastically deformed, and a fixing portion which is connected to each of both ends of the elastic portion and disposed inside the sealing groove to be fixed.

The elastic portion may be deformed to protrude to the outside of the housing according to a change in pressure of the accommodation space so that the accommodation space and the external space communicate with each other.

A direction, in which the communication groove is recessed, and a direction in which the elastic portion is deformed to protrude may be perpendicular to each other.

When the elastic portion is elastically deformed, an internal material disposed inside the communication space may be discharged to the external space along the communication passage in the direction in which the elastic portion is deformed to protrude.

The internal material may include at least one of a gas or flame.

In a state in which each of the communication groove and the sealing groove is provided in plurality in the housing, the switching part may pass through the plurality of communication grooves and the plurality of sealing grooves so as to be provided in one.

The communication groove may be provided in plurality in a longitudinal direction of the housing, and the switching part may be disposed to pass through the plurality of communication grooves in a direction parallel to the longitudinal direction of the housing.

### ADVANTAGEOUS EFFECTS

According to the preferred embodiments of the present invention, the battery pack may be deformed according to the internal pressure to discharge the internal material such as internal gas and flame, so that the phenomenon, in which the battery pack is exploded or the toxic gas and the flame is discharged unintentionally, is prevented to prevent the resultant casualties and the damage to property in advance.

In addition, the effects may be included which could be easily predicted by those skilled in the art from the configurations according to the preferred embodiments of the present invention.

### BRIEF DESCRIPTION OF THE DRAWINGS

The following drawings attached in this specification illustrate a preferred embodiment of the present invention and function along with the detailed description of the invention. The present invention should not be construed as being limited to only the drawings.
FIG. 1 is a perspective view of a battery pack according to an embodiment.
FIG. 2 is a perspective view of a battery pack with one side separated according to an embodiment.
FIG. 3 is an enlarged view of a portion A in FIG. 2.
FIG. 4 is a cross-sectional view of a state before a switching part is deformed according to an embodiment.
FIG. 5 is a cross-sectional view of a state after a switching part is deformed according to an embodiment.
FIG. 6 is a perspective view of a battery pack according to another embodiment.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. In the drawing, the same or similar reference numerals refer to the same or similar elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

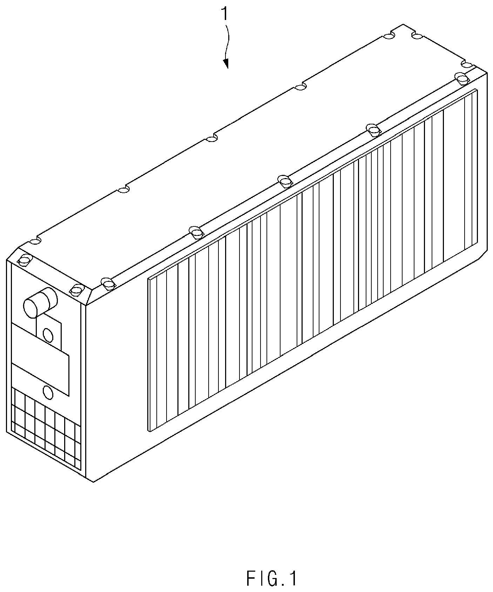

FIG. 1 is a perspective view of a battery pack 1 according to an embodiment.

Referring to FIG. 1, the battery pack 1 may have an inner accommodation space to accommodate a secondary battery therein. The battery pack 1 may protect the secondary battery from external factors such as an external impact, in a state of accommodating the secondary battery therein. In addition, the battery pack 1 may function to allow the inner accommodation space and an external space to communicate with each other according to situations so that the secondary battery more effectively operates. For example, when a problem such as an occurrence of gas or flame, occurs inside the battery pack 1 due to a defect of the secondary battery, the battery pack 1 may be deformed so that the inner accommodation space and the external space communicate with each other, to discharge an internal material such as gas or flame, to the outside. According to this structure and operational principle, as the battery pack 1 discharges the internal material such as gas or flame, to the outside according to situations, a phenomenon in which the battery pack 1 is exploded or toxic gas and flame is discharged unintentionally, may be prevented to prevent resultant casualties and damage to property.

### Embodiment 1

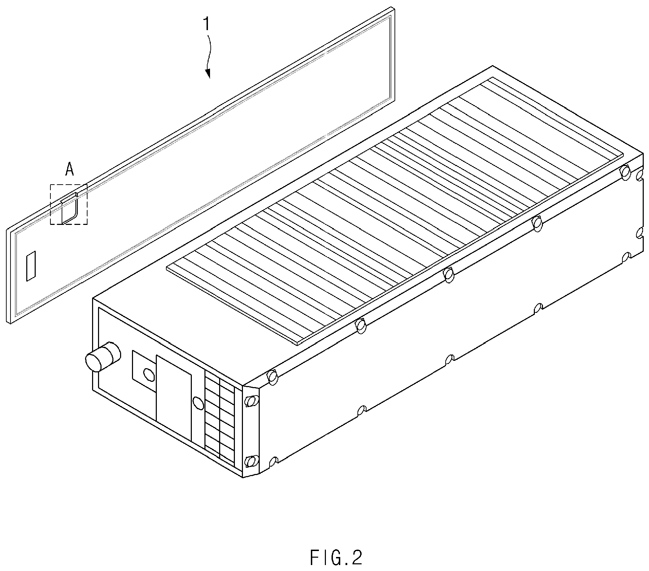

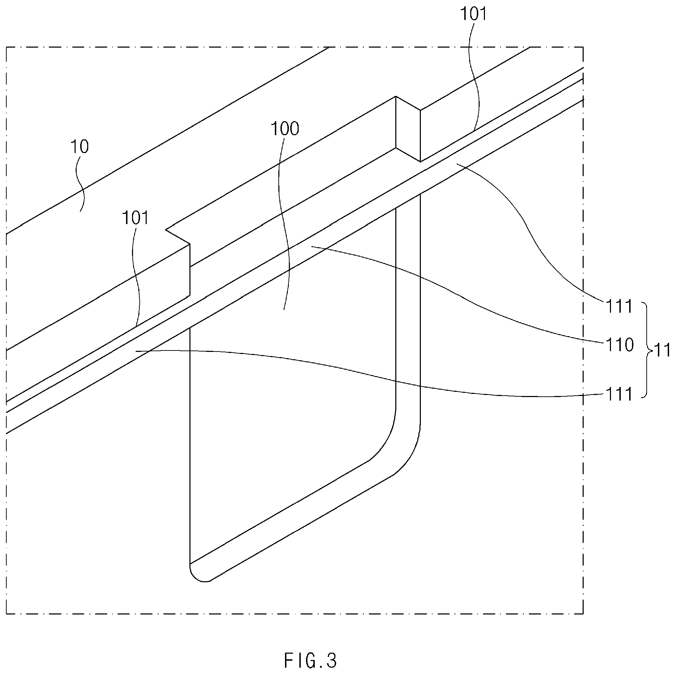

FIG. 2 is a perspective view of a battery pack 1 with one side separated according to an embodiment. FIG. 3 is an enlarged view of a portion A in FIG. 2.

Referring to FIGS. 2 and 3, the battery pack 1 may include a housing 10 and a switching part 11.

The housing 10 may provide an outer appearance of the battery pack 1. In addition, the housing 10 may have an inner accommodation space to accommodate a secondary battery therein. The housing 10 may accommodate the secondary battery therein to prevent the secondary battery from an external impact.

The switching part 11 may be mounted on the housing 10 to be elastically deformed according to pressure of the accommodation space. The switching part 11 may be elastically deformed to adjust communication between the accommodation space and an external space. For example, when the pressure of the inner accommodation space of the housing 10 increases, the switching part 11 may be elastically deformed to allow the inner accommodation space of the housing 10 and the external space to communicate with each other.

The switching part 11 may be disposed on one sidewall of the housing 10. Specifically, the switching part 11 may be disposed in a longitudinal direction of the one sidewall of the housing 10.

In addition, the switching part 11 may include an elastic material. For example, the switching part 11 may include a synthetic rubber material. Specifically, the switching part 11 may include an ethylene propylene dienepolymer (EPDM) material. According to these materials of the switching part 11, the switching part 11 may have characteristics such as ozone resistance, weather protection, heat aging resistance, water vapor resistance, and resistive properties, and thus have resistance to high temperature and high pressure in the accommodation space.

The housing 10 may include a communication groove 100 and a sealing groove 101.

The communication groove 100 is a groove that is recessed in one end of the housing 10. For example, the communication groove 100 is recessed in an inner side surface of the housing 10. The communication groove 100 may be recessed to provide a communication passage through which the inner accommodation space and the external space communicate with each other. In other words, the communication passage may mean a passage through which the internal material disposed in the accommodation space defined by the communication groove 100 flows to be discharged to the outside.

The sealing groove 101 may be a groove that is recessed in each of both sides of the communication groove 100. In other words, the sealing groove 101 may be recessed in the inner side surface of the housing 10, and the sealing groove 101 may be connected to each of both the sides of the communication groove 100. In addition, the recessed direction of the sealing groove 101 may be parallel to the recessed direction of the communication groove 100. More specifically, the sealing groove 101 may be provided at each of both the sides of the communication groove 100 in a direction parallel to a longitudinal direction of the inner side surface of the housing 10. Additionally, the sealing groove 101 may have a thickness that is less than a thickness of the communication groove 100.

The switching part 11 may be disposed inside the sealing groove 101 in a state of passing through the communication groove 100. Specifically, the switching part 11 may include an elastic portion 110 disposed in the communication groove 100, and a fixing portion 111 disposed in the sealing groove 101. In other words, the fixing portion 111 may be connected to each of both ends of the elastic portion 110 and fixed in a state of being disposed inside the sealing groove 101, and the elastic portion 110 may be disposed inside the communication groove 100 to be elastically deformed. That is, in a state in which the switching part 11 is disposed over the communication groove 100 and the sealing groove 101 defined at each of both the sides of the communication groove 100, a central portion having both sides, each of which is fixed by the sealing groove 101, and disposed in the communication groove 100, i.e., the elastic portion 110, may be elastically deformed.

More specifically, the sealing groove 101 may be provided in the longitudinal direction of the inner side surface of the housing 10, the communication groove 100 may be provided in the middle of the sealing groove 101, and a portion of the switching part 11, i.e., the elastic portion 110, may be disposed on the communication groove 100 in a state in which the switching part 11 is disposed along the sealing groove 101 in the longitudinal direction of the inner side surface of the housing 10.

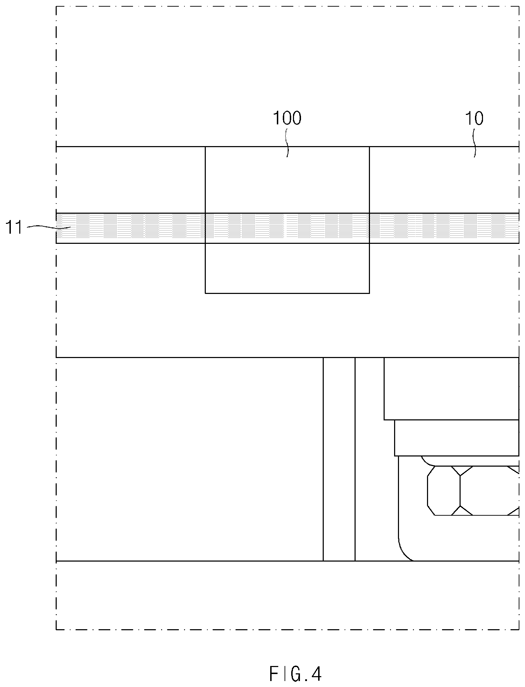

FIG. 4 is a cross-sectional view of a state before the switching part 11 is deformed according to an embodiment.

Referring to FIG. 4, the switching part 11 may be disposed on the communication passage to block the communication between the accommodation space and the external space before being elastically deformed. In other words, in a structure in which the inner accommodation space and the external space are communicable with each other through the communication groove 100 in the absence of the switching part 11, the switching part 11 may be disposed on the communication groove 100 to block the communication passage so that the communication between the inner accommodation space and the external space is blocked. That is, when the switching part 11 is not deformed due to no change in pressure of the inner accommodation space, the switching part 11 may be maintained to have a linear shape over the sealing groove 101 and the communication groove 100. In this case, the elastic portion 110 of the switching part 11 may be disposed on the communication groove 100, i.e., the communication passage, in a state of not being elastically deformed, to operate so that the internal material disposed in the inner accommodation space is not discharged to the outside.

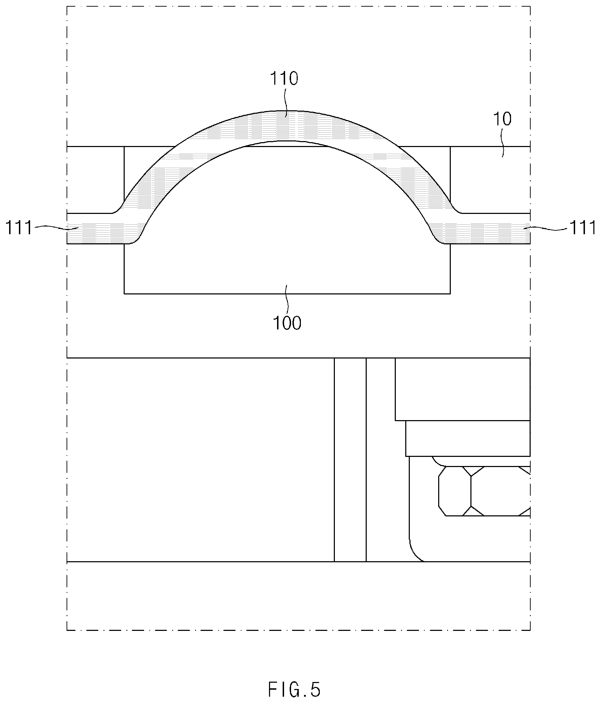

FIG. 5 is a cross-sectional view of a state after the switching part 11 is deformed according to an embodiment.

Referring to FIG. 5, according to a change in pressure of the accommodation space, the elastic portion 110 may be deformed to protrude to the outside of the housing 10 so that the accommodation space and the external space communicate with each other. For example, when damage or a defect occurs in the secondary battery accommodated in the inner accommodation space of the housing 10 to cause an occurrence of gas or flame in the accommodation space, the pressure of the inner accommodation space may rapidly increase and accordingly, the elastic portion 110 may be pushed to protrude to the outside of the housing 10.

In this case, the direction, in which the communication groove 100 is recessed, and the direction in which the elastic portion 110 is deformed to protrude may be perpendicular to each other. Specifically, the communication groove 100 may be provided at one side of an inner side surface of the housing 10, which is connected to a top surface or a bottom surface of the housing 10. That is, the communication groove 100 may provide a communication passage, which communicates with an external space at an upper side or a lower side of the housing 10, in a state of being recessed in the inner side surface of the housing 10, and the elastic portion 110 may be deformed to protrude to the upper side or the lower side of the housing 10 according to a change in pressure of the inner communication space. On the same structural principle, when the communication groove 100 is provided in an inner side of the top surface of the housing 10, the communication groove 100 may provide a communication passage, which communicates with an external space at one side of the housing 10, and the elastic portion 110 may be deformed to protrude to the one side.

When the elastic portion 110 is elastically deformed, the internal material disposed inside the communication space may be discharged to the outside along the communication passage in the direction in which the elastic portion 110 is deformed to protrude. For example, when an internal material including at least one of a gas or flame occurs inside the battery pack 1 due to damage to or a defect of the secondary battery, the pressure of the inner communication space may increase to press the elastic portion 110, and the pressed elastic portion 110 may be pushed and protrude to the outside of the housing 10 so that the internal material is discharged to the external space along the communication passage opened by the elastic portion 110.

Consequently, even when the internal material such as gas or flame, occurs in the communication space due to damage to and a defect of the secondary battery to rapidly increase the pressure of the communication space, the internal material may be effectively discharged to the outside due to the elastic deformation of the switching part 11 so that the explosion of the battery pack 1 is prevented in advance. In addition, as a position of each of the communication groove 100 and the switching part 11 is predesigned to manufacture the battery pack 1, the internal material may be discharged to the specific position intended by a designer even when the internal material such as gas or flame, occurs inside the battery pack 1. Therefore, the battery pack 1 according to an embodiment may prevent the explosion and discharge the internal material of the battery pack 1 to the predetermined position so that casualties and damage to property caused by the explosion of the battery pack 1 and the discharge of the gas or flame may be prevented.

### Embodiment 2

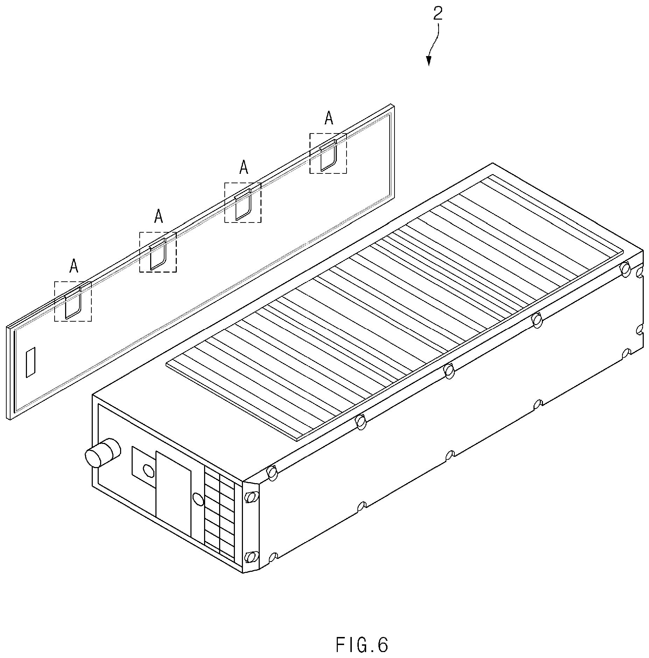

FIG. 6 is a perspective view of a battery pack 2 according to another embodiment.

Referring to FIG. 6, the portion A illustrated in FIG. 2 may be provided in plurality. The battery pack 2 according to another embodiment will be described below on the premise that the battery pack 2 according to another embodiment is just different from the battery pack 1 according to an embodiment in that the portion A is provided in plurality, and is the same in terms of the other configurations.

Each of a communication groove 100 and a sealing groove 101 may be provided in plurality in a housing 10. Specifically, the plurality of communication grooves 100 and sealing grooves 101 may be arranged in a longitudinal direction of an inner side surface of the housing 10, and a switching part 11 may pass through the plurality of communication grooves 100 and the plurality of sealing grooves 101 to be provided in one. That is, the switching part 11 may pass through the plurality of communication grooves 100 and the plurality of sealing grooves 101 to have a linear shape in the longitudinal direction of the inner side surface of the housing 1 before the switching part 11 is elastically deformed because pressure inside an accommodation space does not change.

The switching part 11 may be provided in one with respect to one side surface of the housing 10, or alternatively provided in plurality with respect to a plurality of side surfaces of the housing 10. Additionally, the portion A, which is constituted by the communication groove 100, the sealing groove 101, and the switching part 11, may be designed to be provided in plurality at various positions of the housing 10, such as a front surface, a rear surface, a top surface, and a bottom surface of the housing 10, according to situations.

According to this structure, a discharge structure may be provided in plurality so that a plurality of discharge structures are designed considering a position, at which an internal material such as gas or flame, frequently occurs, an installed position of the battery pack 2, and the like. Accordingly, the battery pack 2 may more effectively discharge the internal material to the outside according to situations. In addition, with respect to the internal material occurrence in the accommodation space and the resultant increase in pressure inside the accommodation space, the battery pack 2 may discharge the internal material through more discharge structures so that the internal material is more effectively discharged.

The description of the present invention is intended to be illustrative, and various changes and modifications can be made by those of ordinary skill in the art to which the present invention pertains, without departing from the scope of the present invention as defined by the appended claims.

Therefore, the embodiments set forth herein are not to limit. The scope of the present invention is not limited by the embodiments.

Moreover, the protective scope of the present invention is defined by the appended claims.

### [Description of the Symbols]

1: Battery pack
10: Housing
11: Switching part
100: Communication groove
101: Sealing groove
110: Elastic portion
111: Fixing portion

## Claims

1. A battery pack (1, 2) in which a secondary battery is accommodated, the battery pack (1, 2) comprising:
a housing (10) in which an accommodation space in which the secondary battery is accommodated is defined; and
a switching part (11) mounted on the housing (10) and elastically deformed according to a pressure in the accommodation space to adjust a communication between the accommodation space and an external space of the housing (10),
wherein the housing (10) has one end in which a communication groove (100) is recessed,
wherein the communication groove (100) is recessed in an inner side surface of the housing (10),
wherein a communication passage through which the accommodation space and the external space communicate with each other is provided inside the communication groove (100), and
wherein the switching part (11) is disposed on the communication passage to block the communication between the accommodation space and the external space before being elastically deformed.

2. The battery pack of claim 1, wherein the switching part (11) is deformed to protrude to the outside of the housing (10) so that the accommodation space and the external space communicate with each other.

3. The battery pack of claim 2, wherein the switching part (11) is deformed to protrude to be parallel to an inner side surface of the housing (10) on which the switching part (11) is provided.

4. The battery pack of claim 1, wherein the housing (10) further comprises a sealing groove (101) that is recessed in each of both sides of the communication groove (100),
wherein the switching part (11) is disposed inside the sealing groove (101) in a state of passing through the communication groove (100).

5. The battery pack of claim 4, wherein the switching part (11) comprises:
an elastic portion (110) disposed inside the communication groove (100) to be elastically deformed; and
a fixing portion (111) connected to each of both ends of the elastic portion (110) and disposed inside the sealing groove (101) to be fixed.

6. The battery pack of claim 5, wherein the elastic portion (110) is deformed to protrude to the outside of the housing (10) according to a change in pressure in the accommodation space so that the accommodation space and the external space communicate with each other.

7. The battery pack of claim 6, wherein a direction, in which the communication groove (100) is recessed, and a direction in which the elastic portion (110) is deformed to protrude are perpendicular to each other.

8. The battery pack of claim 7, wherein, when the elastic portion (110) is elastically deformed, an internal material inside the communication space is discharged to the external space along the communication passage in the direction in which the elastic portion (110) is deformed to protrude.

9. The battery pack of claim 8, wherein the internal material comprises at least one of a gas or a flame.

10. The battery pack of claim 4, wherein, in a state in which each of the communication groove (100) and the sealing groove (101) is provided in plurality in the housing (10), the switching part (11) passes through the plurality of communication grooves (100) and the plurality of sealing grooves (101) so as to be provided in one.

11. The battery pack of claim 10, wherein the communication groove (100) is provided in plurality in a longitudinal direction of the housing (10), and the switching part (11) is disposed to pass through the plurality of communication grooves (100) in a direction parallel to the longitudinal direction of the housing (10).

## Patentansprüche

1. Batteriepack (1, 2), in dem eine Sekundärbatterie aufgenommen ist, wobei der Batteriepack (1, 2) aufweist:
ein Gehäuse (10), in dem ein Aufnahmeraum, in dem die Sekundärbatterie aufgenommen ist, definiert ist; und
ein Schaltteil (11), das an dem Gehäuse (10) angebracht ist und gemäß einem Druck in dem Aufnahmeraum elastisch verformt wird, um eine Verbindung zwischen dem Aufnahmeraum und einem Außenraum des Gehäuses (10) einzustellen,
wobei das Gehäuse (10) ein Ende aufweist, in dem eine Verbindungsnut (100) ausgespart ist,
wobei die Verbindungsnut (100) in einer inneren Seitenfläche des Gehäuses (10) ausgespart ist,
wobei ein Verbindungsdurchgang, durch den der Aufnahmeraum und der Außenraum miteinander in Verbindung stehen, innerhalb der Verbindungsnut (100) bereitgestellt ist, und
wobei das Schaltteil (11) an dem Verbindungsdurchgang angeordnet ist, um die Verbindung zwischen dem Aufnahmeraum und dem Außenraum zu blockieren, bevor es elastisch verformt wird.

2. Batteriepack nach Anspruch 1, wobei das Schaltteil (11) verformt wird, um von dem Gehäuses (10) nach außen vorzustehen, so dass der Aufnahmeraum und der Außenraum miteinander in Verbindung stehen.

3. Batteriepack nach Anspruch 2, wobei das Schaltteil (11) verformt wird, um so vorzustehen, dass es parallel zu einer inneren Seitenfläche des Gehäuses (10) ist, an der das Schaltteil (11) bereitgestellt ist.

4. Batteriepack nach Anspruch 1, wobei das Gehäuse (10) ferner eine Dichtungsnut (101) aufweist, die in jeder der beiden Seiten der Verbindungsnut (100) ausgespart ist,
wobei das Schaltteil (11) innerhalb der Dichtungsnut (101) in einem Zustand angeordnet ist, in dem es durch die Verbindungsnut (100) verläuft.

5. Batteriepack nach Anspruch 4, wobei das Schaltteil (11) aufweist:
einen elastischen Abschnitt (110), der innerhalb der Verbindungsnut (100) angeordnet ist, um elastisch verformt zu werden; und
einen Befestigungsabschnitt (111), der mit jedem der beiden Enden des elastischen Abschnitts (110) verbunden ist und innerhalb der Dichtungsnut (101) angeordnet ist, um befestigt zu werden.

6. Batteriepack nach Anspruch 5, wobei der elastische Abschnitt (110) verformt wird, um gemäß einer Änderung des Drucks in dem Aufnahmeraum von dem Gehäuse (10) nach außen vorzustehen, so dass der Aufnahmeraum und der Außenraum miteinander in Verbindung stehen.

7. Batteriepack nach Anspruch 6, wobei eine Richtung, in der die Verbindungsnut (100) ausgespart ist, und eine Richtung, in der der elastische Abschnitt (110) verformt wird, um vorzustehen, senkrecht zueinander sind.

8. Batteriepack nach Anspruch 7, wobei, wenn der elastische Abschnitt (110) elastisch verformt wird, ein Innenmaterial innerhalb des Verbindungsraums entlang des Verbindungsdurchgangs in der Richtung, in der der elastische Abschnitt (110) verformt wird, um vorzustehen, an den Außenraum abgegeben wird.

9. Batteriepack nach Anspruch 8, wobei das Innenmaterial ein Gas und/oder Flamme enthält.

10. Batteriepack nach Anspruch 4, wobei in einem Zustand, in dem die Verbindungsnut (100) und die Dichtungsnut (101) jeweils mehrfach in dem Gehäuse (10) bereitgestellt sind, das Schaltteil (11) durch die mehreren Verbindungsnuten (100) und die mehreren Dichtungsnuten (101) verläuft, um als Einzelteil bereitgestellt zu sein.

11. Batteriepack nach Anspruch 10, wobei die Verbindungsnut (100) mehrfach in einer Längsrichtung des Gehäuses (10) bereitgestellt ist und das Schaltteil (11) angeordnet ist, um durch die mehreren Verbindungsnuten (100) in einer Richtung parallel zu der Längsrichtung des Gehäuses (10) zu verlaufen.

## Revendications

1. Bloc de batterie (1, 2) dans lequel une batterie secondaire est reçue, le bloc de batterie (1, 2) comportant :
un boîtier (10) dans lequel est défini un espace de réception dans lequel la batterie secondaire est reçue ; et
une pièce de commutation (11) montée sur le boîtier (10) et déformée de manière élastique en fonction d'une pression dans l'espace de réception pour ajuster une communication entre l'espace de réception et un espace externe du boîtier (10),
dans lequel le boîtier (10) a une extrémité dans laquelle une rainure de communication (100) est en retrait,
dans lequel la rainure de communication (100) est en retrait dans une surface latérale intérieure du boîtier (10),
dans lequel un passage de communication au travers duquel l'espace de réception et l'espace externe communiquent l'un avec l'autre est mis en œuvre à l'intérieur de la rainure de communication (100), et
dans lequel la pièce de commutation (11) est disposée sur le passage de communication pour bloquer la communication entre l'espace de réception et l'espace externe avant d'être déformée de manière élastique.

2. Bloc de batterie selon la revendication 1, dans lequel la pièce de commutation (11) est déformée pour faire saillie vers l'extérieur du boîtier (10) de telle sorte que l'espace de réception et l'espace externe communiquent l'un avec l'autre.

3. Bloc de batterie selon la revendication 2, dans lequel la pièce de commutation (11) est déformée pour faire saillie afin d'être parallèle à une surface latérale intérieure du boîtier (10) sur laquelle la pièce de commutation (11) est mise en œuvre.

4. Bloc de batterie selon la revendication 1, dans lequel le boîtier (10) comporte par ailleurs une rainure d'étanchéité (101) qui est en retrait dans chacun des deux côtés de la rainure de communication (100),
dans lequel la pièce de commutation (11) est disposée à l'intérieur de la rainure d'étanchéité (101) dans un état de passage au travers de la rainure de communication (100).

5. Bloc de batterie selon la revendication 4, dans lequel la pièce de commutation (11) comporte :
une partie élastique (110) disposée à l'intérieur de la rainure de communication (100) pour être déformée de manière élastique ; et
une partie de fixation (111) reliée à chacune des deux extrémités de la partie élastique (110) et disposée à l'intérieur de la rainure d'étanchéité (101) à fixer.

6. Bloc de batterie selon la revendication 5, dans lequel la partie élastique (110) est déformée pour faire saillie vers l'extérieur du boîtier (10) en fonction d'un changement de pression dans l'espace de réception de telle sorte que l'espace de réception et l'espace externe communiquent l'un avec l'autre.

7. Bloc de batterie selon la revendication 6, dans lequel une direction, dans laquelle la rainure de communication (100) est en retrait, et une direction dans laquelle la partie élastique (110) est déformée pour faire saillie sont perpendiculaires l'une par rapport à l'autre.

8. Bloc de batterie selon la revendication 7, dans lequel, quand la partie élastique (110) est déformée de manière élastique, un matériau interne à l'intérieur de l'espace de communication est déchargé vers l'espace externe le long du passage de communication dans la direction dans laquelle la partie élastique (110) est déformée pour faire saillie.

9. Bloc de batterie selon la revendication 8, dans lequel le matériau interne comporte au moins l'un parmi un gaz ou une flamme.

10. Bloc de batterie selon la revendication 4, dans lequel, dans un état dans lequel chacune parmi la rainure de communication (100) et la rainure d'étanchéité (101) est mise en œuvre en une pluralité dans le boîtier (10), la pièce de commutation (11) passe au travers de la pluralité de rainures de communication (100) et de la pluralité de rainures d'étanchéité (101) de manière à être mise en œuvre d'un seul tenant.

11. Bloc de batterie selon la revendication 10, dans lequel la rainure de communication (100) est mise en œuvre en une pluralité dans une direction longitudinale du boîtier (10), et la pièce de commutation (11) est disposée pour passer au travers de la pluralité de rainures de communication (100) dans une direction parallèle à la direction longitudinale du boîtier (10).
